# EUROPÄISCHE PATENTSCHRIFT

(11) **EP 3 600 794 B1**
(45) Veröffentlichungstag und Bekanntmachung des Hinweises auf die Patenterteilung: **28.02.2024**
(21) Anmeldenummer: 18714469.6
(22) Anmeldetag: 21.03.2018
(51) Int. Cl.: B25J 9/16

(54) **ÜBERWACHUNGSVERFAHREN UND ÜBERWACHUNGSSYSTEM**
MONITORING METHOD AND MONITORING SYSTEM
PROCÉDÉ DE SURVEILLANCE ET SYSTÈME DE SURVEILLANCE

(30) Priorität: 29.03.2017 DE 102017106791
(43) Veröffentlichungstag der Anmeldung: 05.02.2020
(73) Patentinhaber: KUKA Deutschland GmbH, 86165 Augsburg (DE)
(72) Erfinder: KURZE, Matthias, 85221 Dachau (DE)
(74) Vertreter: Oelke, Jochen
(86) Internationale Anmeldenummer: PCT/EP2018/057193
(87) Internationale Veröffentlichungsnummer: WO 2018/177848

(56) Entgegenhaltungen:
- EP-A2- 2 072 194
- DE-A1-102006 055 849
- DE-A1-102016 003 250
- DE-B3-102015 122 998
- DE-U1-202013 105 036

## Beschreibung

Die Erfindung betrifft ein Verfahren und ein System zur Überwachung von Robotern, insbesondere Industrierobotern und ist im beigefügten Anspruchssatz beschrieben.

Bei unbeabsichtigten Berührungen (Kollisionen) mit einem Roboter können große Kräfte und somit Gefahrensituationen entstehen. Menschen und Gegenstände müssen daher vor unbeabsichtigten Kollisionen in der Umgebung eines Roboters geschützt werden. Aus Sicherheitsgründen haben Menschen bei gewöhnlichen Industrieroboteranlagen während des Roboterbetriebs keinen Zugang zu deren Arbeitsbereich.

Für die Zusammenarbeit eines Roboters mit Menschen in einem gemeinsamen Arbeitsbereich gelten besondere Anforderungen. Zu unterscheiden sind die reine Anwesenheit eines Menschen im Arbeitsbereich des Roboters und die tatsächliche Interaktion zwischen Mensch und Roboter. In beiden Fällen muss der Mensch sicher vor Kollisionen mit dem Roboter geschützt werden.

Bekannt sind kamerabasierte Systeme zur Kollisionserkennung für Industrieroboter, die bei jeglicher Annäherung oder Berührung durch einen Menschen einen Not-Stopp des Roboters auslösen.

In der DE 102015122998 B3 ist ein System zum Betreiben eines Roboters beschrieben, wobei der Roboter durch Aktoren bewegliche Elemente aufweist, und der Roboter Sensoren zur Ermittlung von Signalen aufweist.

In der EP 2072194 A2 ist ein System zur Regelung eines Roboters beschrieben, bei dem ein Abgleich der Soll-kraft mit der Ist-kraft stattfindet und aufgrund des Vergleiches ggf. die Sollkraft angepasst wird.

In der DE 102016003250 A1 ist eine Robotersteuervorrichtung beschrieben, die eine Kontakterfassungseinheit und draus die Roboterbewegung steuert.

Die DE 102015013297 A1 beschreibt ein Verfahren zum Ermitteln eines Schwellenwertes für einen in Abhängigkeit von dem Schwellenwert betreibbaren Roboter.

JP 5353656 B2 beschreibt eine Robotersteuerung für einen Mehrachsroboter mit Dehnungssensoren an der Roboterbasis zur Erkennung eines Kontakts zwischen dem Roboter und der Umgebung. Der Kontakt wird anhand aufgenommener Sensorsignale während einer Lernphase und den während des Betriebs erfassten Sensorsignale erkannt.

JP 200621287 A offenbart einen Roboter mit einem 6-Achs-Kraftsensor am Fuß eines Roboters und eine Steuereinheit zur Berechnung einer externen Kontaktkraft auf den Roboterarm. Die externe Kontaktkraft wird durch Substraktion einer geschätzten internen Kraft von einer gemessenen externen Gesamtkraft ermittelt.

Aufgabe der vorliegenden Erfindung ist es eine verbesserte Roboterüberwachung aufzuzeigen.

Beim Betrieb eines Roboters können verschiedene externe Kräfte und Momente auf den Roboter wirken. Ursachen für externe Belastungen können beispielsweise durch den prozessbedingten Kontakt eines Werkzeugs mit einem Werkstück, durch Berührung eines Menschen oder einer unerwarteten Kollision des Roboters mit seiner Umwelt entstehen. Je nach Ursache und Art der externen Belastung sind unterschiedliche Reaktionen des Roboters erwünscht. Es ist daher vorteilhaft bei der Überwachung eines Roboters externe Belastungen zu erkennen und nach deren Ursache zu unterscheiden.

Die in der Beschreibung und in den Ansprüchen genannten Belastungen und Schnittbelastungen bezeichnen in generalisiertem Sinne sowohl Kräfte als auch Drehmomente in einer oder mehreren Raumdimensionen. Eine Belastung kann jegliche äußere Krafteinwirkung auf den Roboter sein. Beispielsweise wird der Roboter belastet, wenn ein Mensch den Roboterarm in einer bewussten Interaktion mit seiner Hand führt, um eine Bewegung vorzugeben. Eine Belastung wirkt auch auf den Roboter, wenn ein Teil des Roboters oder ein vom Roboter getragenes Teil mit seiner Umwelt kollidiert, z.B. einem Gegenstand, einer Wand oder einem Menschen.

Zur Ermittlung der externen Belastungen auf einen Roboter können die Schnittbelastungen an einer Referenzstelle des Roboters betrachtet werden. In der Mechanik werden Schnittbelastungen bzw. Schnittkräfte und Schnittmomente zur Bauteilauslegung berechnet. Schnittbelastungen ergeben sich aus einem Kräftegleichgewicht der externen Kräfte und physikalischen Reaktionskräfte in einem gedanklichen Schnitt des Körpers oder einer Lagerung. In den Schnittbelastungen sind statische und dynamische Reaktionskräfte aus der Lage und Bewegung der massebehafteten Teile des Roboters mit externen Belastungen auf den Roboter überlagert. Kennt man die Lage und Bewegung des Roboters sowie dessen physikalische Eigenschaften, lassen sich die im Roboterbetrieb, insbesondere im Prozess, erwarteten statischen und dynamischen Reaktionskräfte und -momente an einer bestimmten Stelle modellhaft berechnen.

Die Schnittbelastungen, insbesondere die Kräfte und Momente, werden an einer Referenzstelle des Roboters mit einem Sensor erfasst. Unter Erfassen von Schnittbelastungen ist auch das Beziehen von Signalen über die Schnittbelastungen von einer (elektronischen) Schnittstelle, insbesondere einer Steuerungseinheit oder einer Sensoreinheit, zu verstehen. Bevorzugt werden die Schnittbelastungen mit einem Kraft-Momenten-Sensor erfasst Der Kraft-Momenten-Sensor ist bevorzugt an der Referenzstelle am oder im Roboter verbaut. Es können auch alternative Messvorrichtungen und Messverfahren zur Erfassung der Schnittbelastungen an einer Referenzstelle eingesetzt werden. Die Referenzstelle kann an einer beliebigen Stelle zwischen dem Gestell, an dem der Roboter befestigt ist oder auf dem der Roboter steht, und einem beweglichen Teil des Roboters liegen. Die Anordnung der Referenzstelle zwischen Roboterfuß und Gestell ist besonders vorteilhaft, da Belastungen an allen Punkten des Roboters erfasst werden können. Außerdem kann ein Sensor bei vorhandenen Robotern am Roboterfuß nachgerüstet werden.

Der Roboter weist bevorzugt sechs oder sieben Bewegungsachsen auf. Die Bewegungsachsen sind bevorzugt unabhängig voneinander steuerbar, insbesondere antreibbar oder blockierbar.

Zur Berechnung der erwarteten statischen und dynamischen Reaktionskräfte an der Referenzstelle wird ein Roboterzustand bezogen. Der Roboterzustand umfasst Informationen zur Position und/oder Geschwindigkeit und/oder Beschleunigung bewegter Teile des Roboters. Bevorzugt wird der Roboterzustand von der Robotersteuerung bezogen. Die benötigten Informationen werden in der Regel für die Steuerung des Roboters laufend gemessen, geschätzt oder eingeregelt.

Über ein mathematisches Dynamikmodell des Roboters werden die anhand der Lage und Bewegung des Roboters erwarteten Schnittbelastungen an der Referenzstelle berechnet. Bevorzugt verfügt die Robotersteuerung des Roboters bereits über ein Dynamikmodell des Roboters. Alternativ kann das Modell im Überwachungssystem gespeichert sein. Bei Veränderung des Roboters, z.B. durch Wechsel des Werkzeuges, kann das Dynamikmodell angepasst werden. Ein Dynamikmodell umfasst typischerweise Bewegungsgleichungen, mit denen die Bewegungen des Roboters mit den wirkenden dynamischen Kräften in Bezug gebracht werden.

Die externen Kräfte auf den Roboter werden durch einen Vergleich der gemessenen Schnittbelastungen und der erwarteten Schnittbelastungen geschätzt. Es wird ein Signal der geschätzten, externen Kräfte erzeugt. Bevorzugt werden die Signale der gemessenen und der berechneten Schnittbelastungen mit einem Komparator voneinander subtrahiert. Mit der Differenz kann das Schätzsignal erzeugt werden. Es können auch aufwendigere und gegebenenfalls nichtlineare Schätzalgorithmen eingesetzt werden. Im Signal der geschätzten, externen Kräfte können verschiedene Signalbestandteile und Störeinflüsse enthalten sein. Das Signal kann außerdem mehrdimensional sein oder mehrere Komponenten aufweisen, z.B. für die Komponenten der Kräfte und Momente in den jeweiligen Raumdimensionen. Außerdem kann das Signal zeit- und wertdiskret sein. Das Signal kann insbesondere durch Transformationen im Zeit- und/oder Frequenzraum dargestellt werden.

Ein Aspekt der Erfindung ist, dass die Signalbestandteile der geschätzten, externen Kräfte anhand der Signalcharakteristik unterschieden werden. Es zeigt sich, dass verschiedene reale Belastungen typischerweise bestimmte Signalcharakteristiken aufweisen. Diese Signalcharakteristiken lassen sich im Signal der geschätzten, externen Kräfte erkennen. Zum Beispiel verursachen bewusste menschliche Interaktionen mit einem Roboter typischerweise ein niederfrequentes Schätzsignal und unerwartete Kollisionen des Roboters mit Gegenständen, aber auch mit Menschen, ein hochfrequentes Schätzsignal. Auch zeit- oder richtungsbezogene Muster im Signalverhalten können das Signal bzw. die Signalbestandteile charakterisieren.

Die Signalbestandteile des Signals der externen, geschätzten Kräfte werden anhand der Signalcharakteristik unterschieden. Die Unterscheidung kann in verschiedener Weise und gegebenenfalls mehrstufig in serieller oder paralleler Anordnung mit demselben Signal oder duplizierten Signalen geschehen. Das Signal kann für die Unterscheidung transformiert werden, um beispielsweise im Frequenzraum untersucht zu werden. Bevorzugt werden lineare Signalfilter für die Unterscheidung der Signalbestandteile eingesetzt. Es können auch nichtlineare Filter oder Algorithmen zur Mustererkennung, die gegebenenfalls durch maschinelles Lernen trainierbar sind, eingesetzt werden.

Bei der Unterscheidung der Signalbestandteile können auch bekannte Störeinflüsse berücksichtigt werden. Insbesondere Störeinflüsse aus der Umgebung des Roboters können im Signal detektiert und insbesondere aus dem Signal herausgefiltert werden. Die Störeinflüsse können z.B. durch vorbeifahrende Fahrzeuge oder benachbarte Fertigungsanalagen verursacht und über das Fundament auf den Roboter übertragen werden. Bekannte Störfrequenzen können bevorzugt über einstellbare Kerbfilter herausgefiltert werden.

Das Unterscheidungsergebnis wird hinsichtlich der wahrscheinlichen Ursache der Signalbestandteile qualifiziert. Die Qualifizierung findet durch definierte oder erlernte Regeln statt. Zur Qualifizierung können deterministische oder statistische Verfahren verwendet werden. Bevorzugt werden vordefinierte Regeln angewendet, die Signalbestandteilen in bestimmten Frequenzbändern bestimmte Ursachen zuordnen. So können beispielsweise Signalbestandteile mit hohen Frequenzen als Kollisionen qualifiziert werden. Die Qualifizierung kann implizit über die Anordnung, Einstellung oder Verknüpfung der Elemente, insbesondere der Signalfilter und/oder Evaluierungseinheiten, geschehen. Das Unterscheidungsergebnis kann als gefiltertes Signal der geschätzten, externen Kräfte vorliegen. Alternativ können bei der Unterscheidung neue Signale erzeugt werden.

Das Unterscheidungsergebnis wird anhand definierter Entscheidungsregeln evaluiert. Durch die Evaluierung können bestimmte Belastungen oder Situationen, z.B. gefährliche Kollisionen des Roboters, detektiert und/oder entsprechende Reaktionen ausgelöst werden. Bevorzugt wird das Unterscheidungsergebnis durch Schwellwertvergleiche evaluiert. Wenn beispielsweise der Signalpegel der hochfrequenten Signalbestandteile einen Grenzwert übersteigt, erkennt das System eine unerwartete Kollision und kann einen Not-Stopp des Roboters auslösen.

Werden im Unterscheidungsergebnis bestimmte externe Belastungen detektiert, kann ein Steuersignal für den Roboter erzeugt oder ein bestimmter Betriebsmodus des Roboters ausgelöst werden. Das Steuersignal kann gegebenenfalls über eine Schnittstelle an die Robotersteuerung gesendet werden. Das Steuersignal kann ein Ereignis auslösen oder eine Steuerinformation für den Roboter enthalten. Anhand der Signalcharakteristik kann im Steuersignal zum Beispiel eine Bewegungsanweisung zum Zurückweichen des Roboterarms enthalten sein. Insbesondere kann ein Steuersignal erzeugt werden, wenn eine Kollision des Roboters detektiert wird. Externe Kräfte aus bewussten menschlichen Interaktionen können aber eine anderes oder kein Steuersignal verursachen.

Die Unterscheidung der Signalbestandteile anhand der Signalcharakteristik der geschätzten, externen Kräfte bietet den Vorteil, dass das Überwachungsverfahren während einer Mensch-Roboter-Kollaboration (MRK) eingesetzt werden kann, bei der der Mensch bewusst durch Berührung mit dem Roboter interagiert. Das Überwachungssystem kann bewusste Interaktionen eines Menschen von unerwarteten Kollisionen unterscheiden. Somit kann die Kollisionsüberwachung auch während einer Interaktion eines Menschen mit dem Roboter aktiv sein. Insbesondere können Kollisionen detektiert werden, während ein Mensch den Roboter führt. Dies kann vorteilhaft sein, wenn der Bediener beim Handführen eines Roboterarms zum Beispiel erschrickt und eine plötzliche Bewegung ausführt. Besonders wenn der Roboter die Führungsbewegung durch seinen Antrieb mit einer Kraft unterstützt ist eine solche Kollisionserkennung während einer Interaktion vorteilhaft. In einem solchen Fall kann das Überwachungssystem die plötzliche Reaktion anhand der Signalcharakteristik erkennen und die Roboterbewegung bremsen oder ein sonstiges Steuersignal erzeugen.

Die Entscheidungsregeln für die Erkennung bestimmter Belastungen können im Rahmen einer Applikationsphase des Systems, während eines Lernbetriebs oder im laufenden Betrieb angepasst werden. Das Überwachungssystem kann über einen Prozessor und einen elektronischen Speicher verfügen, in dem das Überwachungsverfahren als Datenverarbeitungsprogramm abgelegt ist.

Die bei der Durchführung eines Fertigungsprozesses, insbesondere mit einem Werkzeug, erzeugten Kräfte auf den Roboter können im Überwachungsverfahren berücksichtigt werden. Beispielsweise kann ein am Roboter befestigtes Werkzeug bewegte Teile umfassen, die Kräfte auf den Roboter ausüben und eine bestimmte Signalcharakteristik aufweisen. Auch beim Kontakt eines Werkzeuges mit einem Werkstück im Fertigungsprozess, beispielsweise einem Falzprozess, können Kräfte auf den Roboter wirken, die eine bestimmte Signalcharakteristik aufweisen und vom Überwachungsverfahren detektiert werden.

Der vom Überwachungssystem überwachte Roboter kann in verschiedenen Betriebsmodi betrieben werden. Beispielsweise ist ein Betrieb des Roboters in einem Automatikmodus, einem Kollaborationsmodus, einem Interaktionsmodus, einem Kollisionsmodus und/oder ein Not-Stopp des Roboters möglich. Die Achsen des Roboters können positions- oder kraftgeregelt sein. Insbesondere kann durch die Erfindung ein kostengünstiger Roboter mit positionsgesteuerten Achsen verbessert und mit neuen Funktionen ausgestattet werden. Im Automatikmodus kann der Roboter einen eigenständigen Prozess, insbesondere einen Fertigungsprozess mit hohen Geschwindigkeiten durchführen. Betritt ein Mensch den Arbeitsbereich, sind weitere Sicherheitsanforderungen zu beachten. Zum Beispiel kann sich der Roboter in einem Kollaborationsmodus langsamer bewegen. Sobald der Mensch den Roboter berührt, kann die Interaktion detektiert werden und/oder ein Interaktionsmodus ausgelöst werden. In einem Interaktionsmodus können die Achsen des Roboters beispielsweise weich geschalten werden, damit der Mensch die Bewegung des Roboters steuern kann. Sollte eine unerwartete Kollision festgestellt werden, kann bei geringer Kraftintensität ein Kollisionsmodus ausgelöst werden, in dem der Roboter beispielsweise vorsichtig zurückweicht oder abbremst.

Die Erfindung ist in der Zeichnung beispielhaft und schematisch dargestellt. Es zeigt:

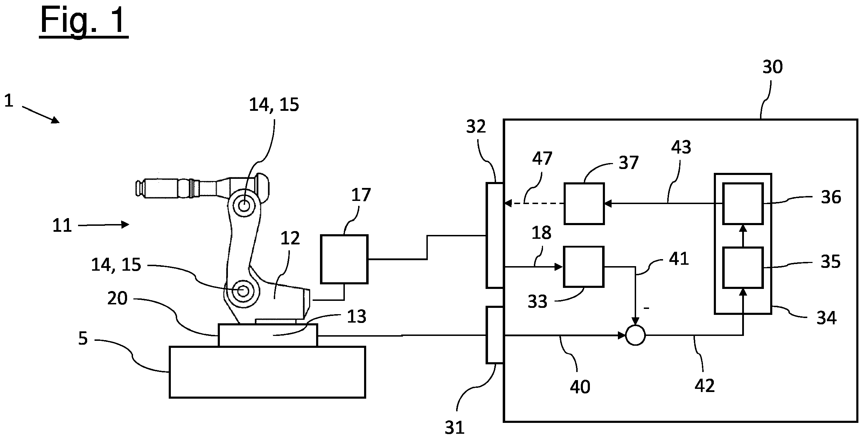

- Figur 1:: eine schematische Darstellung des Überwachungsverfahrens mit einem Überwachungssystem;

Figur 1 zeigt eine schematische Darstellung eines Überwachungssystems (30) zur Überwachung eines Roboters (1) mit einem Kraft-Momenten-Sensor (20) zwischen dem Roboterfuß (12) und einem Gestell (5) des Roboters. Gezeigt ist ein schematischer Signalfluss einer möglichen Ausführungsform. Das Überwachungssystem (30) bezieht über eine Sensorschnittstelle (31) ein Signal der gemessenen, tatsächlichen Schnittbelastungen (40) an der Referenzstelle (13). Die tatsächlichen Schnittbelastungen werden mit den erwarteten Schnittbelastungen (41) verglichen. Dabei werden die externen Kräfte geschätzt und ein Signal der geschätzten, externen Kräfte (42) erzeugt. Die erwarteten Schnittbelastungen (41) werden von einer Dynamikeinheit (33) mit einem mathematischen Dynamikmodell des Roboters berechnet.

In dieser bevorzugten Ausführungsform umfasst die Unterscheidungseinheit (34) zwei lineare Signalfilter. Ein Hochpassfilter (35) unterdrückt niederfrequente Signalbestandteile. Ein Kerbfilter (36) unterdrückt bekannte, insbesondere gelernte, Störfrequenzen. Das Unterscheidungsergebnis (43) umfasst in Folge der Filterung keine niederfrequenten Signalbestandteile aufgrund menschlicher Interaktionen. Eine Evaluationseinheit (37) erkennt im Unterscheidungsergebnis (43), in diesem Fall das gefilterte Signale der geschätzten, externen Kräfte, durch einen Schwellwertvergleich, ob eine unerwartete Kollision des Roboters (1) vorliegt. Wird ein bestimmter Schwellwert im Pegel des Unterscheidungsergebnisses überschritten, kann ein Steuersignal (47) erzeugt werden. Das Steuersignal kann über eine Roboterschnittstelle (32) übertragen werden, insbesondere an eine Robotersteuerung (17) .

Ein Roboter (1) kann eine beliebige Zahl und Kombination von rotatorischen und/oder translatorischen angetriebenen Roboterachsen aufweisen. Der Roboter (1) umfasst einen beweglichen Roboterarm (11), einen Roboterfuß (12), mindestens eine lineare oder rotierende Bewegungsachse (15) und eine Robotersteuerung (17). Ein Industrieroboter (1) kann mit einem Roboterfuß (12) auf einem Gestell (5) oder direkt auf einem Fundament stehen. Alternativ kann der Roboter (1) auch an einem Gestell (5) aufgehängt sein. Der Roboter (1) stützt sich gegenüber der Umwelt über einen Roboterfuß (12) auf einem Gestell (5) ab. Der Roboterfuß (12) verfügt über geeignete Befestigungsmittel, um direkt an einem Gestell (5) oder an einem Sensor (20) befestigt zu werden. Der Sensor (20) kann als Kraft-Momenten-Sensor auch bei Robotern nachgerüstet werden, die zuvor direkt auf einem Gestell (5) verbaut waren. Der Sensor (20) wird mit geeigneten Schnittstellen zwischen Roboterfuß (12) und einem Gestell (5) bzw. dem Fundament angeordnet.

Die Referenzstelle (13) zur Messung der Schnittbelastungen mit einem dortigen Sensor (20) kann an unterschiedlichen Stellen des Roboters liegen. Bevorzugt liegt die Referenzstelle zwischen Roboterfuß (12) und einem Gestell (5). In dieser bevorzugten Ausführungsform lassen sich alle Belastungen am Roboter in den Schnittbelastungen detektieren. Alternativ kann die Referenzstelle auch zwischen zwei beweglichen Teilen des Roboterarms (11) oder zwischen dem Roboterarm (11) und dem Roboterfuß (12) liegen.

Der Roboter (1) umfasst ein Überwachungssystem (30). Das Überwachungssystem kann Teil der Robotersteuerung (17) sein.

Gemäß einer ersten Variante wird das Überwachungsverfahren von einem Überwachungssystem (30) ausgeführt, das über eine Roboterschnittstelle (32) mit einer Robotersteuerung kommuniziert.

Gemäß einer alternativen Ausführungsvariante kann das Überwachungssystem im Steuergerät der Robotersteuerung implementiert sein und über interne Schnittstellen Signale mit anderen Teilen der Robotersteuerung austauschen.

Eine besonders interessante Anwendung der Erfindung liegt in der Fertigung verschiedener Varianten, wobei eine Variante wesentlich seltener gefertigt wird als andere. Hier kann es wirtschaftlich vorteilhaft sein den Roboter nur für die häufigen Varianten in einem vorprogrammierten Fertigungsprozess im Automatikmodus zu betreiben. Für die Fertigung der seltenen Varianten kann der Roboter von einem Bediener geführt werden. Der Roboter wechselt in einen Interaktionsmodus. So kann der Aufwand für die Programmierung des Roboters reduziert werden. Die Wirtschaftlichkeit der Roboteranlage wird somit verbessert.

Abwandlungen der Erfindung sind in verschiedener Weise möglich.

### BEZUGSZEICHENLISTE

- 1: Roboter
- 5: Gestell
- 11: Roboterarm
- 12: Roboterfuß
- 13: Referenzstelle
- 14: Gelenk
- 15: Bewegungsachse
- 17: Robotersteuerung
- 18: Roboterzustand (Signal)
- 20: Sensor; Kraft-Momenten-Sensor
- 30: Überwachungssystem
- 31: Sensorschnittstelle
- 32: Roboterschnittstelle
- 33: Dynamikeinheit
- 34: Unterscheidungseinheit
- 35: Signalfilter; Hochpassfilter
- 36: Signalfilter; Kerbfilter
- 37: Evaluationseinheit
- 40: Tatsächliche Schnittbelastungen (Signal)
- 41: Erwartete Schnittbelastungen (Signal)
- 42: Geschätzte, externe Kräfte (Signal)
- 43: Unterscheidungsergebnis
- 47: Steuersignal

## Patentansprüche

1. Überwachungsverfahren für einen Roboter (1), umfassend folgende Schritte:
- erfassen der tatsächlichen Schnittbelastungen (40) an einer Referenzstelle (13) des Roboters (1), insbesondere an einer Referenzstelle (13) zwischen Roboterfuß (12) und einem Gestell (5) des Roboters oder an einer Referenzstelle an einem Gelenk (14) des Roboters (1), mit einem dortigen Sensor (20);
- beziehen eines gemessenen oder geschätzten Roboterzustands (18), umfassend die Position und/oder die Geschwindigkeit und/oder die Beschleunigung bewegter Teile des Roboters (1);
- berechnen der erwarteten Schnittbelastungen (41) an der Referenzstelle (13) anhand eines mathematischen Dynamikmodells des Roboters (1) und des bezogenen Roboterzustands (18);
- schätzen der externen Kräfte (42) auf den Roboter (1) anhand eines Vergleichs der erwarteten Schnittbelastungen (41) und der tatsächlichen Schnittbelastungen (40);
- unterscheiden verschiedener Signalbestandteile der geschätzten, externen Kräfte (42) anhand einer Signalcharakteristik;
- wobei das Unterscheidungsergebnis (43) qualifiziert wird hinsichtlich der wahrscheinlichen Belastungsursache der Signalbestandteile;
- wobei anhand definierter Entscheidungsregeln im Unterscheidungsergebnis (43) bewusste menschliche Interaktionen oder unerwartete Kollisionen des Roboters mit Gegenständen oder Menschen detektiert werden;
- wobei den Schnittbelastungen (40) statische und dynamische Reaktionskräfte aus der Lage und Bewegung der massebehafteten Teile des Roboters (1) mit externen Belastungen auf den Roboter (1) überlagert sind.

2. Überwachungsverfahren nach Anspruch 1, **dadurch gekennzeichnet, dass** im Falle einer bestimmten externen Belastung ein Steuersignal (47) für den Roboter (1) erzeugt wird oder ein bestimmter Betriebsmodus des Roboters (1) ausgelöst wird.

3. Überwachungsverfahren nach einem der vorhergehenden Ansprüche **dadurch gekennzeichnet, dass** das Signal der geschätzten, externen Kräfte (42) zur Unterscheidung der verschiedenen Signalbestandteile mit einem oder mehreren Signalfiltern, insbesondere einem Hochpassfilter (35) und/oder einem Kerbfilter (36), gefiltert wird.

4. Überwachungsverfahren nach einem der vorhergehenden Ansprüche, **gekennzeichnet durch** das Beziehen eines gemessenen oder geschätzten Roboterzustands (18), umfassend die Position und/oder die Geschwindigkeit und/oder die Beschleunigung einer Bewegten Roboterausstattung, wobei die Roboterausstattung insbesondere ein Werkzeug oder ein sonstiger Anbau des Roboters ist.

5. Überwachungssystem für einen Roboter (1) mit einer Datenverarbeitungseinheit und einer Sensorschnittstelle (31) zum Austausch von Signalen mit einem Sensor, insbesondere einem Kraft-Momenten-Sensor (20), **dadurch gekennzeichnet, dass** das Überwachungssystem (30) dazu ausgebildet ist ein Überwachungsverfahren nach einem der vorhergehenden Ansprüche durchzuführen.

6. Überwachungssystem nach Anspruch 5 **dadurch gekennzeichnet, dass** das Überwachungssystem als separate Steuerungseinheit ausgebildet ist oder in einer Robotersteuerung (17) des Roboters (1) implementiert ist.

7. Überwachungssystem nach einem der vorhergehenden Ansprüche **dadurch gekennzeichnet, dass** das Überwachungssystem (30) eine Roboterschnittstelle (32) zum Austausch von Signalen mit dem Roboter (1) oder dessen Robotersteuerung (17) aufweist.

8. Roboter, insbesondere ein Industrieroboter, mit einem beweglichen Roboterarm (11), einem Roboterfuß (12), mindestens einer linearen oder rotierenden Bewegungsachse (15) und einer Robotersteuerung (17), wobei der Roboterfuß (12) auf einem Gestell (5) befestigt werden kann und der Roboter (1) einen Sensor (20), insbesondere einen Kraft-Momenten-Sensor, zur Berechnung der Schnittbelastungen und/oder -Momente an einer Referenzstelle (13) zwischen dem Gestell (5) und einem Teil des Roboterarms (11) aufweist, **dadurch gekennzeichnet, dass** der Roboter (1) über ein Überwachungssystem (30) nach einem der Ansprüche 5 bis 7 verfügt.

## Claims

1. Monitoring method for a robot (1), comprising the following steps:
- detecting the actual internal loads (40) at a reference point (13) of the robot (1), in particular at a reference point (13) between the robot base (12) and a mount (5) of the robot or at a reference point at a joint (14) of the robot (1), by way of a sensor (20) situated there;
- acquiring a measured or estimated robot state (18), comprising the position and/or the speed and/or the acceleration of moving parts of the robot (1);
- calculating the expected internal loads (41) at the reference point (13) using a mathematical dynamic model of the robot (1) and the acquired robot state (18);
- estimating the external forces (42) on the robot (1) by comparing the expected internal loads (41) and the actual internal loads (40);
- differentiating between various signal components of the estimated, external forces (42) using signal characteristics;
- wherein the differentiation result (43) is qualified with respect to the probable load cause of the signal components;
- wherein intentional human interactions or unexpected collisions between the robot and objects or humans are detected using defined decision rules in the differentiation result (43);
- wherein, in the internal loads (40), static and dynamic reaction forces from the position and movement of the mass-afflicted parts of the robot (1) are superimposed with external loads on the robot (1).

2. Monitoring method according to Claim 1, **characterized in that**, in the case of a specific external load, a control signal (47) is generated for the robot (1) or a specific operating mode of the robot (1) is initiated.

3. Monitoring method according to either of the preceding claims, **characterized in that** the signal of the estimated, external forces (42) is filtered by way of one or more signal filters, in particular a high-pass filter (35) and/or a notch filter (36), in order to differentiate between the various signal components.

4. Monitoring method according to any of the preceding claims, **characterized by** acquiring a measured or estimated robot state (18), comprising the position and/or the speed and/or the acceleration of a moving item of robot equipment, wherein the item of robot equipment is, in particular, a tool or some other attachment for the robot.

5. Monitoring system for a robot (1), having a data processing unit and a sensor interface (31) for exchanging signals with a sensor, in particular a force-torque sensor (20), **characterized in that** the monitoring system (30) is designed to carry out a monitoring method according to any of the preceding claims.

6. Monitoring system according to Claim 5, **characterized in that** the monitoring system is designed as a separate control unit or is implemented in a robot controller (17) of the robot (1).

7. Monitoring system according to either of the preceding claims, **characterized in that** the monitoring system (30) has a robot interface (32) for exchanging signals with the robot (1) or the robot controller (17) of the robot.

8. Robot, in particular an industrial robot, having a moving robot arm (11), a robot base (12), at least one linear or rotating movement axle (15) and a robot controller (17), wherein the robot base (12) can be secured on a mount (5) and the robot (1) has a sensor (20), in particular a force-torque sensor, for calculating the internal loads and/or torques at a reference point (13) between the mount (5) and a part of the robot arm (11), **characterized in that** the robot (1) has a monitoring system (30) according to any of Claims 5 to 7.

## Revendications

1. Procédé de surveillance pour un robot (1), comprenant les étapes suivantes consistant à :
- détecter les contraintes de coupe réelles (40) au niveau d'un emplacement de référence (13) du robot (1), en particulier au niveau d'un emplacement de référence (13) entre le pied de robot (12) et un bâti (5) du robot ou au niveau d'un emplacement de référence à une articulation (14) du robot (1), à l'aide d'un capteur (20) à cet endroit ;
- obtenir un état de robot (18) mesuré ou estimé, comprenant la position et/ou la vitesse et/ou l'accélération des parties en mouvement du robot (1) ;
- calculer les contraintes de coupe attendues (41) au niveau de l'emplacement de référence (13) à l'aide d'un modèle dynamique mathématique du robot (1) et de l'état de robot (18) obtenu ;
- estimer les forces externes (42) agissant sur le robot (1) à l'aide d'une comparaison des contraintes de coupe attendues (41) et des contraintes de coupe réelles (40) ;
- distinguer différentes composantes de signal des forces externes estimées (42) à l'aide d'une caractéristique de signal ;
- dans lequel le résultat de distinction (43) est qualifié quant à la cause de contrainte probable des composantes de signal ;
- dans lequel, des interactions humaines délibérées ou des collisions inattendues du robot avec des objets ou des personnes sont détectées dans le résultat de distinction (43) à l'aide de règles de décision définies ;
- dans lequel des forces de réaction statiques et dynamiques provenant de la position et du mouvement des parties lestées du robot (1) avec des contraintes externes sur le robot (1) sont superposées dans les contraintes de coupe (40).

2. Procédé de surveillance selon la revendication 1, **caractérisé en ce que** dans le cas d'une contrainte externe déterminée, un signal de commande (47) est généré pour le robot (1) ou un mode de fonctionnement déterminé du robot (1) est déclenché.

3. Procédé de surveillance selon l'une quelconque des revendications précédentes, **caractérisé en ce que** le signal des forces externes estimées (42) est filtré par un ou plusieurs filtres de signal, en particulier un filtre passe-haut (35) et/ou un filtre coupe-bande (36), pour distinguer les différentes composantes de signal.

4. Procédé de surveillance selon l'une quelconque des revendications précédentes, **caractérisé par** l'obtention d'un état de robot (18) mesuré ou estimé, comprenant la position et/ou la vitesse et/ou l'accélération d'un équipement de robot en mouvement, dans lequel l'équipement de robot est en particulier un outil ou un autre élément rapporté du robot.

5. Système de surveillance pour un robot (1), comprenant une unité de traitement de données et une interface de capteur (31) pour échanger des signaux avec un capteur, en particulier avec un capteur de force-moments (20), **caractérisé en ce que** le système de surveillance (30) est réalisé pour exécuter un procédé de surveillance selon l'une quelconque des revendications précédentes.

6. Système de surveillance selon la revendication 5, **caractérisé en ce que** le système de surveillance est réalisé sous forme d'unité de commande séparée ou est mis en œuvre dans une commande de robot (17) du robot (1) .

7. Système de surveillance selon l'une quelconque des revendications précédentes, **caractérisé en ce que** le système de surveillance (30) présente une interface de robot (32) pour échanger des signaux avec le robot (1) ou sa commande de robot (17).

8. Robot, en particulier robot industriel, comprenant un bras de robot (11) mobile, un pied de robot (12), au moins un axe de mouvement (15) linéaire ou rotatif, et une commande de robot (17), dans lequel le pied de robot (12) peut être fixé à un bâti (5) et le robot (1) présente un capteur (20), en particulier un capteur force-moments, pour calculer les contraintes et/ou moments de coupe au niveau d'un emplacement de référence (13) entre le bâti (5) et une partie du bras de robot (11), **caractérisé en ce que** le robot (1) dispose d'un système de surveillance (30) selon l'une quelconque des revendications 5 à 7.
